# EUROPEAN PATENT APPLICATION

(11) **EP 4 286 249 A1**
(43) Date of publication of application: **06.12.2023**
(21) Application number: 22871140.4
(22) Date of filing: 29.11.2022
(51) Int. Cl.: B62D 5/06, B62D 5/08, B62D 5/18

(54) **FOUR-WHEEL STEERING CONTROL SYSTEM AND CONTROL METHOD THEREFOR**

(30) Priority: 19.04.2022 CN 202210407581
(71) Applicant: LINGONG HEAVY MACHINERY CO., LTD, Jinan City, Shandong 250104 (CN)
(72) Inventor: ZHANG, Zhaoliang, Jinan, Shandong 250104 (CN); LI, Shaolei, Jinan, Shandong 250104 (CN); WANG, Dehong, Jinan, Shandong 250104 (CN); XUE, Desen, Jinan, Shandong 250104 (CN); ZHAO, Zengzhi, Jinan, Shandong 250104 (CN); DENG, Xiaofei, Jinan, Shandong 250104 (CN); GUO, Bing, Jinan, Shandong 250104 (CN)
(74) Representative: Rapisardi, Mariacristina
(86) International application number: PCT/CN2022/134980
(87) International publication number: WO 2023/202080

(57) **Abstract**

Provided are a four-wheel steering control system and a method therefor. The four-wheel steering control system includes a front drive axle, a front drive cylinder, a rear drive axle, a rear drive cylinder, a first reversing valve, a second reversing valve, and a switch valve. The front drive cylinder is drivingly connected to the front drive axle, and the rear drive cylinder is drivingly connected to the rear drive axle. A first working oil port of the first reversing valve communicates with one oil chamber of the front drive cylinder. A second working oil port of the first reversing valve communicates with an oil inlet of the second reversing valve. An oil return port of the second reversing valve communicates with another oil chamber of the front drive cylinder. Two working oil ports of the second reversing valve communicate with two oil chambers of the rear drive cylinder one to one. The oil return port of the second reversing valve communicates with an oil tank through the switch valve.

## Description

This application claims priority to Chinese Patent Application No. 202210407581.5 filed on Apr. 19, 2022, the disclosure of which is incorporated herein by reference in its entirety.

### TECHNICAL FIELD

The present application relates to the technical field of four-wheel drive, for example, a four-wheel steering control system and a control method therefor.

### BACKGROUND

With rapid development, construction sites, large or small, are spread throughout the country, and construction machinery is springing up. Due to different construction conditions on construction sites and relatively harsh environments, vehicle circulation construction is more suitable in narrow and complicated places with much debris. Therefore, the four-wheel steering technology emerged and is applied in a wider range of fields.

In the related art, vehicles only feature a front-wheel steering mode, a four-wheel steering mode, and a crab steering mode. The rear wheels of the vehicles cannot realize independent steering control, leading to poor driving flexibility.

### SUMMARY

The present application provides a four-wheel steering control system and a control method therefor, which can realize independent steering control of the rear wheels of vehicles, improve driving flexibility, meet various working conditions, and facilitate drive of the rear wheels for independent centering.

In one aspect, an embodiment of the present application provides a four-wheel steering control system, including a front drive axle, a front drive cylinder, a rear drive axle, a rear drive cylinder, a first reversing valve, a second reversing valve, and a switch valve.

The front drive cylinder is drivingly connected to the front drive axle. The rear drive cylinder is drivingly connected to the rear drive axle. A first working oil port of the first reversing valve communicates with one oil chamber of the front drive cylinder. A second working oil port of the first reversing valve communicates with an oil inlet of the second reversing valve. An oil return port of the second reversing valve communicates with another oil chamber of the front drive cylinder. Two working oil ports of the second reversing valve communicate with two oil chambers of the rear drive cylinder one to one. The oil return port of the second reversing valve communicates with an oil tank through the switch valve.

In another aspect, an embodiment of the present application provides a control method for a four-wheel steering control system, which is applied to any one of the four-wheel steering control systems described above. The control method includes the operations described below.

In a front-wheel steering mode, the first reversing valve is controlled to switch to a first work position, the second reversing valve is controlled to maintain a middle position, and the switch valve is controlled to maintain a closed position, so as to drive front wheels to steer in a first direction; or the first reversing valve is controlled to switch to a second work position, the second reversing valve is controlled to maintain the middle position, and the switch valve is controlled to maintain the closed position, so as to drive the front wheels to steer in a second direction.

In a rear-wheel steering mode, the first reversing valve is controlled to switch to the second work position, the second reversing valve is controlled to switch to a second work position, and the switch valve is controlled to switch to a conduction position, so as to drive rear wheels to steer in the first direction; or the first reversing valve is controlled to switch to the second work position, the second reversing valve is controlled to switch to a first work position, and the switch valve is controlled to switch to the conduction position, so as to drive the rear wheels to steer in the second direction.

### BRIEF DESCRIPTION OF DRAWINGS

FIG. 1 is a diagram of a four-wheel steering control system according to an embodiment of the present application.
FIG. 2 is a diagram of a signal jump of a detection member according to an embodiment of the present application.
FIG. 3 is a flowchart of the control method for the four-wheel steering control system according to an embodiment of the present application.
FIG. 4 is a diagram of a four-wheel steering control system according to an embodiment of the present application.
FIG. 5 is a circuit diagram of a four-wheel steering control system according to an embodiment of the present application.

### Reference list

- 1: first reversing valve
- 11: first working oil port
- 12: second working oil port
- 2: second reversing valve
- 21: oil inlet
- 22: oil return port
- 23: third working oil port
- 24: fourth working oil port
- 3: switch valve
- 4: front drive cylinder
- 41: first oil chamber
- 42: second oil chamber
- 5: rear drive cylinder
- 51: third oil chamber
- 52: fourth oil chamber
- 6: front drive axle
- 7: rear drive axle
- 81: first signal
- 82: second signal
- 9: detection member
- 10: controller
- 11: trigger switch

### DETAILED DESCRIPTION

In the description of the present application, unless otherwise expressly specified and limited, a term "connected to each other", "connected" or "secured" is to be construed in a broad sense, for example, as securely connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific situations.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the embodiments, it is to be noted that orientations or position relations indicated by terms such as "above", "below", "left" and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present application. In addition, terms "first" and "second" are used only to distinguish between descriptions and have no special meaning.

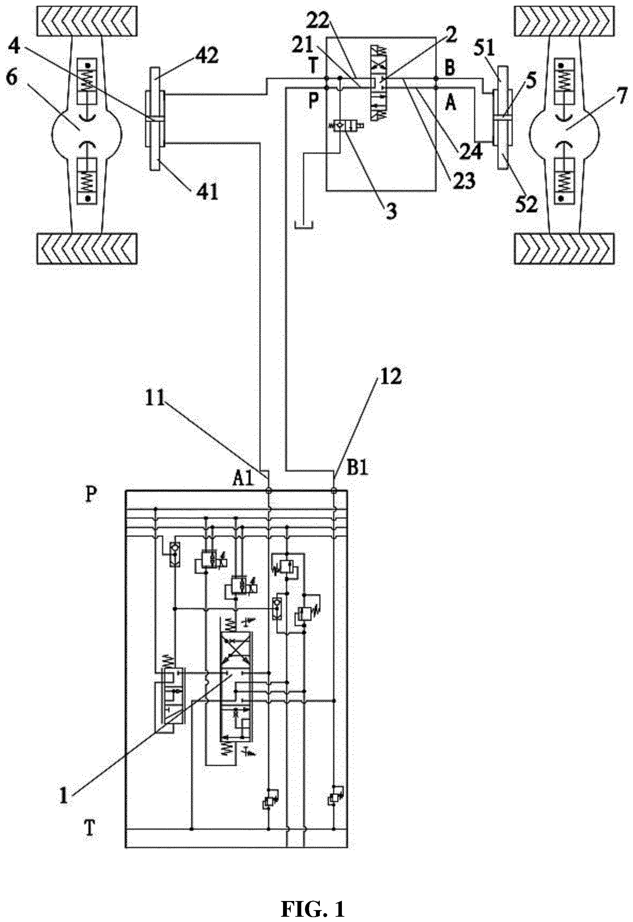

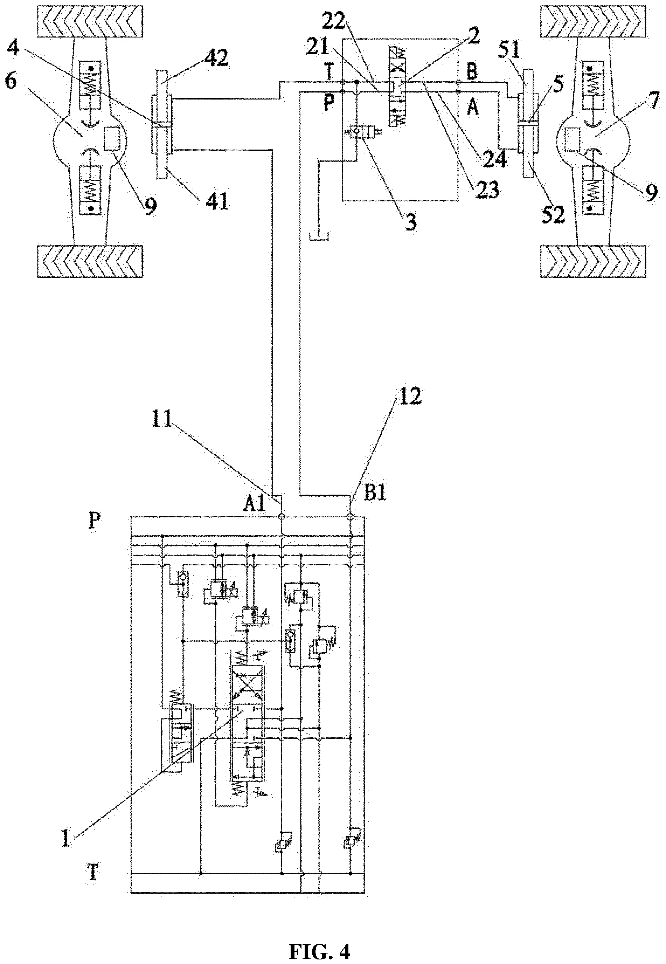

As shown in FIG. 1 and FIG. 4, this embodiment provides a four-wheel steering control system, including a front drive axle 6, a front drive cylinder 4, a rear drive axle 7, a rear drive cylinder 5, a first reversing valve 1, a second reversing valve 2, and a switch valve 3.

In an embodiment, the front drive cylinder 4 is drivingly connected to the front drive axle 6, and the rear drive cylinder 5 is drivingly connected to the rear drive axle 7. A first working oil port 11 of the first reversing valve 1 communicates with one oil chamber of the front drive cylinder 4. A second working oil port 12 of the first reversing valve 1 communicates with an oil inlet 21 of the second reversing valve 2. An oil return port 22 of the second reversing valve 2 communicates with another oil chamber of the front drive cylinder 4. Two working oil ports of the second reversing valve 2 communicate with two oil chambers of the rear drive cylinder 5 one to one. The oil return port 22 of the second reversing valve 2 communicates with an oil tank through the switch valve 3.

In this embodiment, the front drive cylinder 4 includes a first oil chamber 41 and a second oil chamber 42. The first working oil port 11 communicates with the first oil chamber 41, and the oil return port 22 of the second reversing valve 2 communicates with the second oil chamber 42. When the first oil chamber 41 receives oil and the second oil chamber 42 discharges oil, front wheels steer in a first direction. When the second oil chamber 42 receives oil and the first oil chamber 41 discharges oil, the front wheels steer in a second direction. The rear drive cylinder 5 includes a third oil chamber 51 and a fourth oil chamber 52. The two working oil ports of the second reversing valve 2 are a third working oil port 23 and a fourth working oil port 24. The third working oil port 23 is connected to the third oil chamber 51, and the fourth working oil port 24 is connected to the fourth oil chamber 52. When the third oil chamber 51 receives oil and the fourth oil chamber 52 discharges oil, rear wheels steer in the first direction. When the fourth oil chamber 52 receives oil and the third oil chamber 51 discharges oil, the rear wheels steer in the second direction.

When in operation, the first reversing valve 1 is controlled to switch to a second work position, the second reversing valve 2 is controlled to switch to a second work position, and the valve 3 is controlled to switch to a conduction position, the oil flows into the third oil chamber 51 of the rear drive cylinder 5 through the first reversing valve 1 and the second reversing valve 2 to drive the rear wheels to steer in the first direction. When the first reversing valve 1 is controlled to switch to the second work position, the second reversing valve 2 is controlled to switch to a first work position, and the switch valve 3 is controlled to switch to the conduction position, the oil flows into the fourth oil chamber 52 of the rear drive cylinder 5 through the first reversing valve 1 and the second reversing valve 2 to drive the rear wheels to steer in the second direction. And when the rear drive cylinder 5 drives the rear wheels to steer directions, the oil which returns to the rear drive cylinder 5 flows into the oil tank through the second reversing valve 2 and the switch valve 3. This embodiment realizes independent steering control of the rear wheels of vehicles, improves driving flexibility, meets various working conditions, and facilitates the drive of the rear wheels for independent centering.

In related technologies, to adapt to different working conditions, axle-driven electric boom lift cars have been added a four-wheel steering mode and a crab steering mode on the basis of the commonly used two-wheel steering mode. However, the switching of different steering modes is completely through hydraulic pressure, and the electronic control system simply controls the on-off of the switch valve 3. When different switch valves 3 are combined, the hydraulic system can realize different steering modes according to different combinations of on-off of the switch valves 3. In related technologies, a rotation-angle sensor is configured for each steering wheel to facilitate the control of the steering mode. The electronic control system controls the steering direction of each wheel according to the angular position of each wheel. In this manner, two-wheel steering, four-wheel steering, and crab steering can be realized. When the steering wheels are in chaos, the electronic control system can realize automatic centering according to the angular position of each wheel. However, the four-wheel steering control system of this embodiment has no usable rotation-angle sensor, so when the steering wheels are in chaos, automatic centering is not achieved according to the angular positions of the steering wheels.

To solve the above-mentioned problem, the four-wheel steering control system also includes two detection members 9 which are disposed on the front drive axle 6 and the rear drive axle 7 respectively and are configured to detect position states of front wheels and rear wheels respectively. The position states include a middle position, a left side of the middle position, and a right side of the middle position. When at least one of the front wheels or the rear wheels is in a middle position, the detection members 9 output a first signal 81; when at least one of the front wheels or the rear wheels is not in a middle position, the detection members 9 output a second signal 82. When the detection members 9 are in operation, the position states of the wheels are determined and recorded according to a steering direction of the wheels when the first signal 81 and the second signal 82 are switched in the previous action. It should be noted that the preceding wheels include front wheels and rear wheels, and wheels are a general term for front wheels and rear wheels.

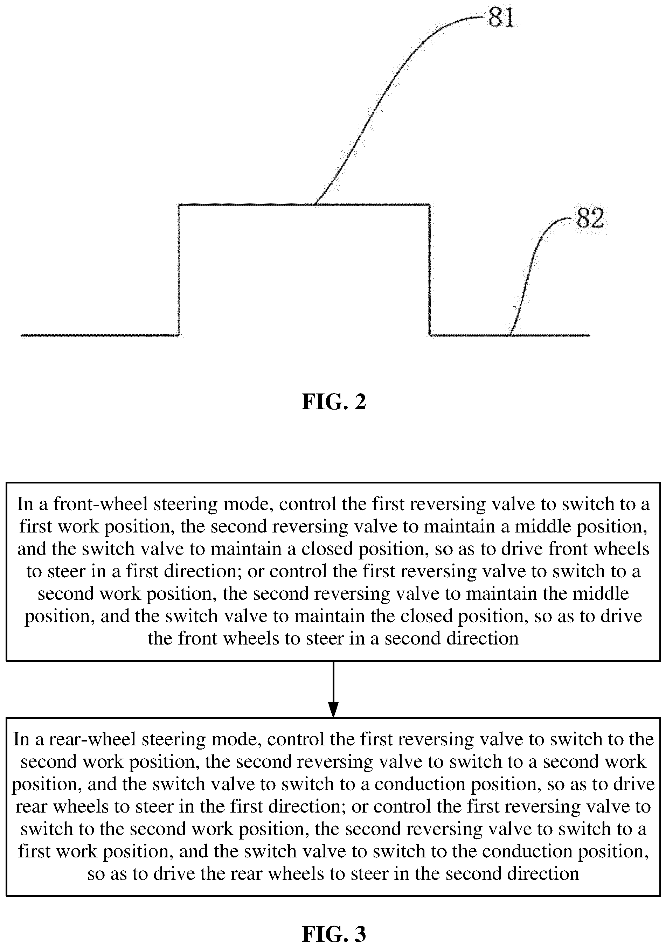

In this embodiment, as shown in FIG. 2, detection members 9 are centering switches. One of the first signal 81 or the second signal 82 is a high-level signal, and another one of the first signal 81 or the second signal 82 is a low-level signal.

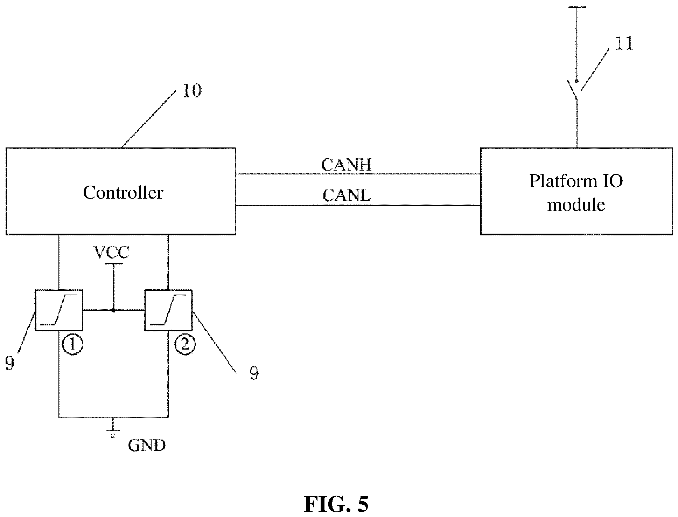

In an embodiment, as shown in FIG. 5, the four-wheel steering control system also includes a trigger switch 11 configured to control the front wheels and the rear wheels to steer to a middle position.

In this embodiment, the first reversing valve 1, the second reversing valve 2, and the switch valve 3 are electromagnetic valves, which are controlled by a controller 10.

The first reversing valve 1 is a three-position six-way reversing valve, including a first work position, a second work position, and a third work position. When the first reversing valve 1 is in the first work position, oil flows out through the first working oil port 11 and returns to the second working oil port 12. When the first reversing valve 1 is in the second work position, the oil flows out through the second working oil port 12 and returns to the first working oil port 11. When the first reversing valve 1 is in the third work position, the first working oil port 11 and the second working oil port 12 are blocked separately, and the four-wheel steering control system does not work at this time.

The second reversing valve 2 is a three-position four-way reversing valve, including a first work position, a second work position, and a middle position. When the second reversing valve 2 is in the second work position, the oil inlet 21 communicates with the third working oil port 23, and the oil return port 22 communicates with the fourth working oil port 24. When the second reversing valve 2 is in the first work position, the oil inlet 21 communicates with the fourth working oil port 24, and the oil return port 22 communicates with the third working oil port 23. When the second reversing valve 2 is in the middle position, the oil inlet 21 communicates with the oil return port 22.

The switch valve 3 is a two-position two-way reversing valve, including a conduction position and a closed position. When the switch valve 3 is in the conduction position, the oil return port 22 of the second reversing valve 2 communicates with the oil tank. When the switch valve 3 is in the closed position, the oil return port 22 of the second reversing valve 2 and the oil tank are cut off.

As shown in FIG. 3, this embodiment also provides a control method for a four-wheel steering control system which is applied to the four-wheel steering control systems described above. The control method includes a front-wheel steering mode, a rear-wheel steering mode, a four-wheel steering mode, and a crab steering mode, which improves the flexibility of the four-wheel steering control system.

In an embodiment, in the front-wheel steering mode, the first reversing valve 1 is controlled to switch to a first work position, the second reversing valve 2 is controlled to maintain in a middle position, and the switch valve 3 is controlled to maintain in a closed position. In this manner, the oil flows into the first oil chamber 41 of the front drive cylinder 4 through the first working oil port 11 of the first reversing valve 1 to drive the front wheels to steer in a first direction, and then the oil flows out through the second oil chamber 42 of the front drive cylinder 4 and flows back to the second working oil port 12 of the first reversing valve 1 through the second reversing valve 2. Or the first reversing valve 1 is controlled to switch to a second work position, the second reversing valve 2 maintains in the middle position, and the switch valve 3 is controlled to maintain in the closed position. In this manner, the oil flows into the second oil chamber 42 of the front drive cylinder 4 through the first reversing valve 1 and the second reversing valve 2 to drive the front wheels to steer in a second direction, and then the oil flows out through the first oil chamber 41 of the front drive cylinder 4 and flows back to the first working oil port 11 of the first reversing valve 1, thus realizing the independent drive of the front wheels.

In the rear-wheel steering mode, the first reversing valve 1 is controlled to switch to the second work position, the second reversing valve 2 is controlled to switch to a second work position, and the switch valve 3 is controlled to switch to a conduction position. In this manner, the oil flows into the third oil chamber 51 of the rear drive cylinder 5 through the first reversing valve 1 and the second reversing valve 2 to drive rear wheels to steer in the first direction, and then the oil flows out through the fourth oil chamber 52 of the rear drive oil cylinder 5 and flows into the oil tank through the second reversing valve 2 and the switch valve 3. Or the first reversing valve 1 is controlled to switch to the second work position, the second reversing valve 2 is controlled to switch to a first work position, and the switch valve 3 is controlled to switch to a conduction position. In this manner, the oil flows into the fourth oil chamber 52 of the rear drive cylinder 5 through the first reversing valve 1 and the second reversing valve 2 to drive the rear wheels to steer in the second direction, and then the oil flows out through the third oil chamber 51 of the rear drive cylinder 5 and flows into the oil tank through the second reversing valve 2 and the switch valve 3. When the rear drive cylinder 5 drives the rear wheels to steer directions, the oil which returns to the rear drive cylinder 5 flows into the oil tank through the second reversing valve 2 and the switch valve 3, thereby realizing the independent drive of the rear wheels.

In the crab steering mode, the first reversing valve 1 is controlled to switch to the second work position, the second reversing valve 2 is controlled to switch to the first work position, and the switch valve 3 is controlled to maintain the closed position. In this manner, the oil flows into the fourth oil chamber 52 of the rear drive cylinder 5 through the first reversing valve 1 and the second reversing valve 2, and then the oil flows out through the third oil chamber 51 of the rear drive oil cylinder 5 and flows into the second oil chamber 42 of the front drive oil cylinder 4 through the second reversing valve 2 to drive the front wheels and the rear wheels to steer in the second direction simultaneously, and then the oil flows out through the first oil chamber 41 of the front drive cylinder 4 and flows into the first working oil port 11 of the first reversing valve 1. Or the first reversing valve 1 is controlled to switch to the first work position, the second reversing valve 2 is controlled to switch to the first work position, and the switch valve 3 is controlled to maintain the closed position. In this manner, the oil flows into the first oil chamber 41 of the front drive cylinder 4 through the first reversing valve 1, and then the oil flows out from the second oil chamber 42 of the front drive cylinder 4 and flows into the third oil chamber 51 of the rear drive cylinder 5 through the second reversing valve 2 to drive the front wheels and the rear wheels to steer in the first direction simultaneously, and then the oil flows out of the fourth oil chamber 52 of the rear drive oil cylinder 5 and flows into the second working oil port 12 of the first reversing valve 1 through the second reversing valve 2 so that the front wheels and the rear wheels can steer in the same direction at the same time.

In the four-wheel steering mode, the first reversing valve 1 is controlled to switch to the second work position, the second reversing valve 2 is controlled to switch to the second work position, and the switch valve 3 is controlled to maintain the closed position. In this manner, the oil flows into the third oil chamber 51 of the rear driving cylinder 5 through the first reversing valve 1 and the second reversing valve 2, and then the oil flows out through the fourth oil chamber 52 of the rear drive cylinder 5 and flows into the second oil chamber 42 of the front drive cylinder 4 through the second reversing valve 2 to drive the front wheels to steer in the second direction and the rear wheels to steer in the first direction simultaneously, and then the oil flows out of the first oil chamber 41 of the front drive cylinder 4 and flows into the first working oil port 11 of the reversing valve 1. Or the first reversing valve 1 is controlled to switch to the first work position, the second reversing valve 2 is controlled to switch to the second work position, and the switch valve 3 is controlled to maintain the closed position. In this manner, the oil flows into the first oil chamber 41 of the front drive cylinder 4 through the first reversing valve 1, and then the oil flows out through the second oil chamber 42 of the front drive cylinder 4 and flows into the fourth oil chamber 52 of the rear drive cylinder 5 through the second reversing valve 2 to drive the front wheels to steer in the first direction and the rear wheels to steer in the second direction simultaneously, and then the oil flows out through the third oil chamber 51 of the rear drive oil cylinder 5 and flows into the second working oil port 12 of the first reversing valve 1 through the second reversing valve 2 so that the front wheels and the rear wheels are steered simultaneously in opposite directions.

To prevent safety accidents caused by misjudgment when the front wheels and rear wheels are not in a centered state, in an embodiment, detection members 9 are disposed on the front drive axle 6 and the rear drive axle 7 respectively and are configured to detect position states of the front wheels and the rear wheels. A controller 10 is configured to receive a detection signal from the detection members 9 and control the steering of the front wheels and the rear wheels according to the detection signal so that at least one of the front wheels or the rear wheels is centered. The front-wheel centering is driven by the front-wheel steering mode, and the rear-wheel centering is driven by the rear-wheel steering mode.

In an embodiment, when at least one of the front wheels or the rear wheels is in a middle position, the detection members 9 output a first signal 81; and when at least one of the front wheels or the rear wheels is not in a middle position, the detection members output a second signal 82. The step of detecting the position states includes determining and recording the position states of the wheels according to a steering direction of the wheels when the first signal 81 and the second signal 82 are switched in the previous action. In this embodiment, the detection member 9 is a centering switch whose first signal 81 is a high-level signal and whose second signal 82 is a low-level signal. From being untriggered to being triggered, the signal of the centering switch jumps from low level to high level, which is called a rising edge; and from being triggered to being untriggered, the signal of the centering switch jumps from high level to low level, which is called a falling edge.

When the steering is manually operated, no matter whether the steering relationship of the front wheels or the rear wheels is chaotic, the electromagnetic valve controlling the wheels enables the wheels to steer in the correct direction under the control of the controller 10. When the drive-axle moves from an uncentered state to a centered state or from a centered state to an uncentered state, the centering switch has a signal jump, that is, a rising edge or a falling edge happens. In this case, the controller 10 can judge whether the current wheels turn to the right or the left according to the direction of motion of the wheels (turn left or right) and the jump of the centering switch and permanently save the position of the wheels so that even if powered off at this time, the controller 10 still knows the position states of the wheels before the power failure when the controller 10 is powered on again.

When an operator toggles the trigger switch 11, the controller 10 controls the action of the corresponding electromagnetic valve according to the position of the wheels at this time so that the wheels move toward the middle position in sequence. When the signal of the centering switch collected by the controller 10 becomes high level, the steering is stopped immediately to complete the automatic centering.

In this embodiment, the position states of the wheels are judged by using the signal jump of the centering switch and the steering direction. To provide the controller 10 with the position information of the wheels, an operator simply needs to toggle the automatic centering trigger switch 11 on the controller 10. The controller 10 automatically controls the wheels to start turning toward the middle position to realize the automatic centering of the wheels. At the same time, it is necessary to reasonably configure the steering speed of the wheels during the automatic centering to ensure that the wheels can stop in time when moving to the middle position, thereby realizing automatic centering.

It should be noted that the controller 10 in this embodiment is an electronic control unit (ECU).

## Claims

1. A four-wheel steering control system, comprising:
a front drive axle (6) and a front drive cylinder (4), wherein the front drive cylinder (4) is drivingly connected to the front drive axle (6);
a rear drive axle (7) and a rear drive cylinder (5), wherein the rear drive cylinder (5) is drivingly connected to the rear drive axle (7);
a first reversing valve (1) and a second reversing valve (2), wherein a first working oil port (11) of the first reversing valve (1) communicates with one oil chamber of the front drive cylinder (4), a second working oil port (12) of the first reversing valve (1) communicates with an oil inlet (21) of the second reversing valve (2), an oil return port (22) of the second reversing valve (2) communicates with another oil chamber of the front drive cylinder (4), and two working oil ports of the second reversing valve (2) communicate with two oil chambers of the rear drive cylinder (5) one to one; and
a switch valve (3), wherein the oil return port (22) of the second reversing valve (2) communicates with an oil tank through the switch valve (3).

2. The four-wheel steering control system of claim 1, further comprising two detection members (9) which are disposed on the front drive axle (6) and the rear drive axle (7) respectively and are configured to detect position states of front wheels and rear wheels respectively, wherein the position states comprise a middle position, a left side of the middle position, and a right side of the middle position;
the detection members (9) are configured to output a first signal (81) when at least one of the front wheels or the rear wheels is in the middle position; and
the detection members (9) are configured to output a second signal (82) when at least one of the front wheels or the rear wheels is not in the middle position.

3. The four-wheel steering control system of claim 2, wherein the detection members (9) are centering switches, one of the first signal (81) or the second signal (82) is a high-level signal, and another one of the first signal (81) or the second signal (82) is a low-level signal.

4. The four-wheel steering control system of claim 1, wherein the first reversing valve (1) is a three-position six-way reversing valve.

5. The four-wheel steering control system of claim 1, wherein the second reversing valve (2) is a three-position four-way reversing valve, and
the switch valve (3) is a two-position two-way reversing valve.

6. The four-wheel steering control system of claim 2, further comprising a trigger switch (11) configured to control the front wheels and the rear wheels to steer to the middle position.

7. A control method for a four-wheel steering control system, the method being applied to the four-wheel steering control system of any one of claims 1 to 6 and comprising:
in a front-wheel steering mode, controlling the first reversing valve (1) to switch to a first work position, the second reversing valve (2) to maintain a middle position, and the switch valve (3) to maintain a closed position, so as to drive front wheels to steer in a first direction; or controlling the first reversing valve (1) to switch to a second work position, the second reversing valve (2) to maintain the middle position, and the switch valve (3) to maintain the closed position, so as to drive the front wheels to steer in a second direction; and
in a rear-wheel steering mode, controlling the first reversing valve (1) to switch to the second work position, the second reversing valve (2) to switch to a second work position, and the switch valve (3) to switch to a conduction position, so as to drive rear wheels to steer in the first direction; or controlling the first reversing valve (1) to switch to the second work position, the second reversing valve (2) to switch to a first work position, and the switch valve (3) to switch to the conduction position, so as to drive the rear wheels to steer in the second direction.

8. The control method of claim 7, further comprising:
in a crab steering mode, controlling the first reversing valve (1) to switch to the second work position, the second reversing valve (2) to switch to the first work position, and the switch valve (3) to maintain the closed position, so as to drive the front wheels and the rear wheels to steer in the second direction simultaneously; or controlling the first reversing valve (1) to switch to the first work position, the second reversing valve (2) to switch to the first work position, and the switch valve (3) to maintain the closed position, so as to drive the front wheels and the rear wheels to steer in the first direction simultaneously; and
in a four-wheel steering mode, controlling the first reversing valve (1) to switch to the second work position, the second reversing valve (2) to switch to the second work position, and the switch valve (3) to maintain the closed position, so as to drive the front wheels to steer in the second direction and the rear wheels to steer in the first direction simultaneously; or controlling the first reversing valve (1) to switch to the first work position, the second reversing valve (2) to switch to the second work position, and the switch valve (3) to maintain the closed position, so as to drive the front wheels to steer in the first direction and the rear wheels to steer in the second direction simultaneously.

9. The control method of claim 7 or 8, wherein detection members (9) are disposed on the front drive axle (6) and the rear drive axle (7) respectively and are configured to detect position states of the front wheels and the rear wheels respectively, and a controller (10) is configured to receive a detection signal from the detection members (9) and control steering of the front wheels and the rear wheels according to the detection signal so that at least one of the front wheels or the rear wheels is centered.

10. The control method of claim 9, wherein when at least one of the front wheels or the rear wheels is in a middle position, the detection members (9) output a first signal (81); and when at least one of the front wheels or the rear wheels is not in the middle position, the detection members (9) output a second signal (82); and
detecting the position states of the front wheels and the rear wheels respectively comprises determining and recording the position states of the front wheels according to the steering of the front wheels performed when the first signal (81) and the second signal (82) are switched in a previous action; and determining and recording the position states of the rear wheels according to the steering of the rear wheels performed when the first signal (81) and the second signal (82) are switched in the previous action.
